# EUROPEAN PATENT SPECIFICATION

(11) **EP 3 468 858 B1**
(45) Date of publication and mention of the grant of the patent: **18.11.2020**
(21) Application number: 17737050.9
(22) Date of filing: 13.06.2017
(51) Int. Cl.: B62D 53/06

(54) **ADJUSTABLE SEMITRAILER WITH STEERABLE AXLE CARRIER**
EINSTELLBARER ANHÄNGER MIT LENKBAREM FAHRGESTELL
REMORQUES RÉGLABLES AVEC UN CHÂSSIS DIRIGEABLE

(30) Priority: 13.06.2016 IT UA20164311
(43) Date of publication of application: 17.04.2019
(73) Proprietor: Masiero Spedizioni S.r.l., 30175 Venezia Marghera (IT); Aerodynamic S.r.l., 06044 Castel Ritaldi (Perugia) (IT)
(72) Inventor: BENEDETTI, Roberto, 06044 Castel Ritaldi (Perugia) (IT); MASIERO, Enrico, 30033 Noale (Venezia) (IT)
(74) Representative: Piovesana, Paolo
(86) International application number: PCT/IB2017/053482
(87) International publication number: WO 2017/216710

(56) References cited:
- EP-A1- 0 094 701
- EP-A1- 1 488 990
- EP-A1- 2 374 699
- EP-A2- 1 728 709
- EP-A2- 1 775 203
- EP-A2- 2 873 558
- DE-A1-102008 021 807
- DE-U1-202010 007 129
- FR-A1- 2 880 861
- FR-A1- 2 904 597
- GB-A- 2 264 468
- GB-A- 2 523 809
- NL-A- 9 302 168
- US-A- 3 682 423
- US-A- 4 865 341
- US-A1- 2001 024 059

## Description

The present invention relates to an improved semitrailer for interchangeable bodies, containers and similar equipment used for intermodal transport and to a method for distributing their weight on the vehicle axles.

For the sake of convenience of explanation in the present description, reference will be made to a container-carrying semitrailer, meaning more in general a semitrailer for all types of interchangeable bodies.

Container-carrying semitrailers comprising a frame supported on the rear by axles and on the front by a tractor, to which the semitrailer is connected by means of a traditional coupling between a pin, provided on the semitrailer, and a fifth wheel, provided in the tractor, are known.

According to its type, the semitrailer may comprise one or more axles either constrained directly to the frame, onto which the containers are positioned and fixed, or constrained to an axle-carrying structure interposed between them and the frame.

The most common containers (ISO containers) have standardized size (they are generally eight feet wide, eight feet and six inches tall and twenty, thirty, forty or forty-five feet long) and they are also provided at the vertexes and/or in other appropriate positions with "corner castings", which can be engaged by specific bolts or twistlocks provided in the frame of the semitrailer in corresponding positions. It consequently derives that the positions of the twistlocks on the frame must be standardized.

Then, since the length of the containers differs, the frames of the semitrailers must also have correspondingly different lengths and this determines the problem of being able to use a same semitrailer for transporting containers of different lengths.

This problem was solved in part by using, for example, a forty-foot frame, which can receive either one forty-foot container or two twenty-foot containers, as long as the frame itself is provided with retractable twistlocks, at least in the positions in which they would be hindering when they are not in use. In particular, this applies to the twistlocks intended to engage the close corner castings of two twenty-foot containers.

Furthermore, the regulations governing the circulation of vehicles on the road in general, and thus also of container-carrying vehicles, require the load on the semitrailer to be balanced and borne in substantially distributed manner on the axles of the vehicle, and i.e. on the axles of the semitrailer and on the axles of the tractor, the latter circumstance being difficult to reconcile with the practical needs determined by the criteria of organization and handling coordination of the containers. For example, in the case of a forty-foot semitrailer loaded with two twenty-foot containers, it is not uncommon for one of the two containers to be empty or loaded with very light goods and the other to be loaded to its maximum capacity and/or in all cases with heavy goods.

"Extensible" container-carrying semitrailers are also known, meaning that they are provided with a telescopically extensible frame formed by two or more mutually sliding parts. They obviously adapt in length to the type of container to be transported, i.e. they may be configured so as to have a length suited to receive one or two twenty-foot containers or one thirty-foot, one forty-foot or one forty-five-foot container. It is also provided that the axles are supported by an axle-carrying structure integral with one or the other part of the frame or even that one part of the axle-carrying structure is integral with one part of the frame and that the other part of the axle-carrying structure is integral with another part of the frame, which is longitudinally movable with respect to the first one.

Obviously, the twistlocks are constrained to parts of the frame and so their distance in longitudinal sense varies according to the variation of their length, in order to be able to adapt the frame to the particular container to be supported.

This known solution has certainly solved some problems, because it has made it possible to adapt the frame, and thus the semitrailer, to the particular required use, by at the same time has revealed a series of limits and drawbacks, that the present invention proposes to solve.

One drawback is that the telescopic extensibility of the frame required a given construction complexity, with inevitable repercussion on construction costs, on the weight of the semitrailer and on the risk of malfunctioning over time.

Another drawback is in that the frame of the semitrailer as a function of the type of container to be transported must be adjusted before the container is fixed to the frame itself. So there is no guarantee of correct load distribution on the vehicle axles and even more so this guarantee is lacking if, for example, a semitrailer may be loaded upon departure with two twenty-foot containers and the transport schedule provides changes to the initial load, and in particular the replacement of a full container with an empty container or the only partial removal of goods from a container, which will continue the journey in different load conditions from the initial ones.

US 4865341, US 6257669 and US 6582024 teach to make semitrailers with an axle-carrying structure sliding with respect to a box to be coupled to a tractor. The movement occurs exclusively to take the axle-carrying structure to two specific engagement positions, corresponding to the semitrailer to be coupled to a tractor in order to be towed alone or to the semitrailer to be coupled to a tractor so as to receive a further semitrailer coupled to it. Neither the use of the semitrailer with container nor the possibility of distributing the load between the axles in the desired manner is provided.

GB 2264468 teaches to make a container-carrying semitrailer on which containers of the desired standardized sizes may be mounted; however, the position of the axle-carrying structure with respect to the container-carrying structure must be defined before the container is mounted on the semitrailer and so before the container is loaded, with no possibility of distributing the weight of the container and of its load on the vehicle axles in desired manner, nor of adapting the weight of the container on said axles if the distribution of said weight varies. Another example for a container carrying semi trailer is shown in FR 2 880 861 A1.

It is the object of the invention to eliminate these drawbacks and to make a container-carrying semitrailer which is simple to construct and is light in weight.

It is another object of the invention to make a container-carrying semitrailer which has a high flexibility of use and which may therefore be practically used for containers of any standardized size.

It is another object of the invention to make a container-carrying semitrailer which allows a correct distribution of the load on the axles regardless of the loading methods of the container or of the containers constrained to the frame of the semitrailer.

It is another object of the invention to make a container-carrying semitrailer, in which the weight distribution of the load on the axles can be modified simply and rapidly without needing to preventively remove the container or containers from the frame of the semitrailer.

It is another object of the invention to make a container-carrying semitrailer which makes it possible to achieve all the purposes illustrated hereto, while respecting the limits established by regulations governing circulation on the road, i.e. without forming an oversized vehicle and thus without needing to be subjected to the more stringent regulations established for their circulation.

It is another object of the invention to make a container-carrying semitrailer which allows the tipping of the container or of the containers mounted on the frame, e.g. in order to promote the unloading operations of the goods arranged jumbled inside them.

It is another object of the invention to make a container-carrying semitrailer which has an alternative characterization, in both construction and functional terms, with respect to the traditional ones.

It is another object of the invention to suggest a method for distributing the weight of one or more containers on the axles of a semitrailer, on which said container or containers are mounted, in simple, rapid and correct manner.

These and other objects which will result from the description that follows are achieved either jointly or separately according to the invention by a semitrailer for interchangeable bodies, containers and similar equipment used for intermodal transport as defined in claim 1 and by a method for distributing their weight on the axles of said semitrailer as defined in claim 12.

In particular, according to the invention, the semitrailer for interchangeable bodies, containers and similar equipment used for intermodal transport, is characterized in that it comprises:
- a frame, adapted to support two aligned twenty-foot containers of standardized type and provided with traditional corner castings,
- a pin, provided on an end of said frame and removably engageable in a fifth wheel of a traditional tractor,
- a plurality of locking means mounted on said frame in positions corresponding to the corner castings of said containers,
- an axle-carrying structure longitudinally sliding on said frame and lockable in a plurality of predetermined positions,
- three axles mounted on said axle-carrying structure, one front, one central and one rear, the latter being steering and having a distance from the central axle greater than the distance of the latter from the front axle,
and in that the extreme rear position of said axle-carrying structure with respect to said frame being such to keep the axis of said steering rear axle in position protruding on the rear beyond the rear locking means mounted on said frame.

Advantageously, said frame comprises a pair of longitudinal members distanced from each other by a measure smaller than the standardized length of said containers.

Advantageously, said frame comprises a pair of traverse beams having a length equal to the standardized width of said containers.

Advantageously, said locking means are constrained to the ends of at least one of said traverse beams.

Advantageously, said frame also comprises further traverse beams of length equal to the distance between the two longitudinal members of the frame.

Advantageously, said axle-carrying structure is provided with at least one locking member of the sliding of said frame with respect to it.

Advantageously, said frame is provided with telescopic parking legs of the semitrailer uncoupled from said tractor.

Advantageously, the semitrailer comprises intermediate traverse beams, which are arranged along the longitudinal members of said frame at positions of the corner castings of the different types of containers to be constrained to the frame.

The present invention is further explained by means of a preferred embodiment given by way of non-limiting practical example only with reference to the accompanying drawings, in which:

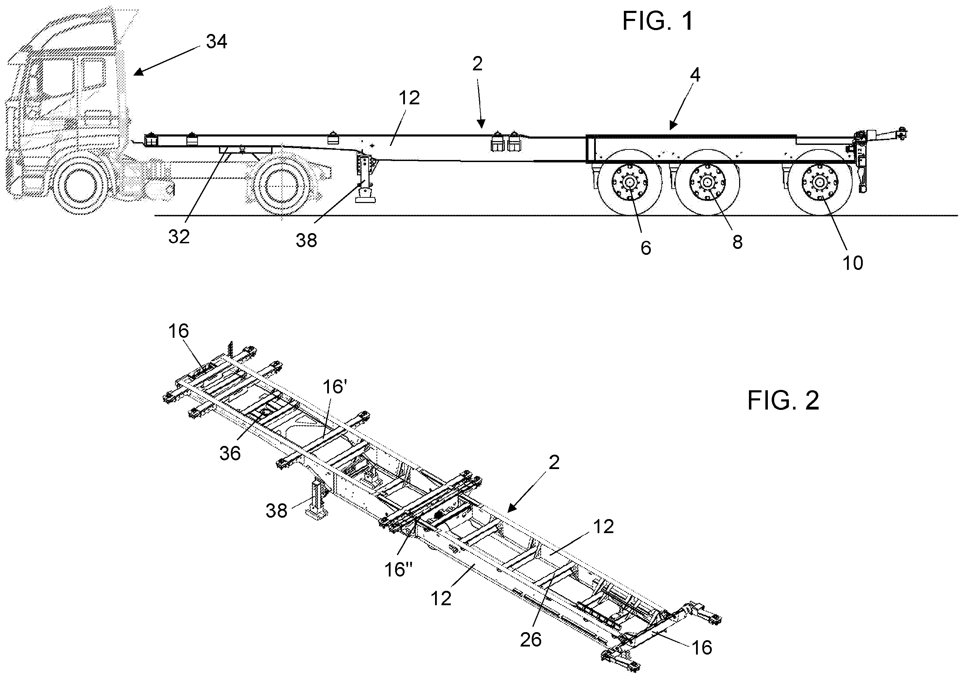

- Figure 1: shows a side view of a container-carrying semitrailer according to the invention coupled to a tractor and free from container,
- Figure 2: shows a perspective view of the semitrailer frame free from axle-carrying structure,
- Figure 3: shows a perspective view on enlarged scale of only the front part of said frame,

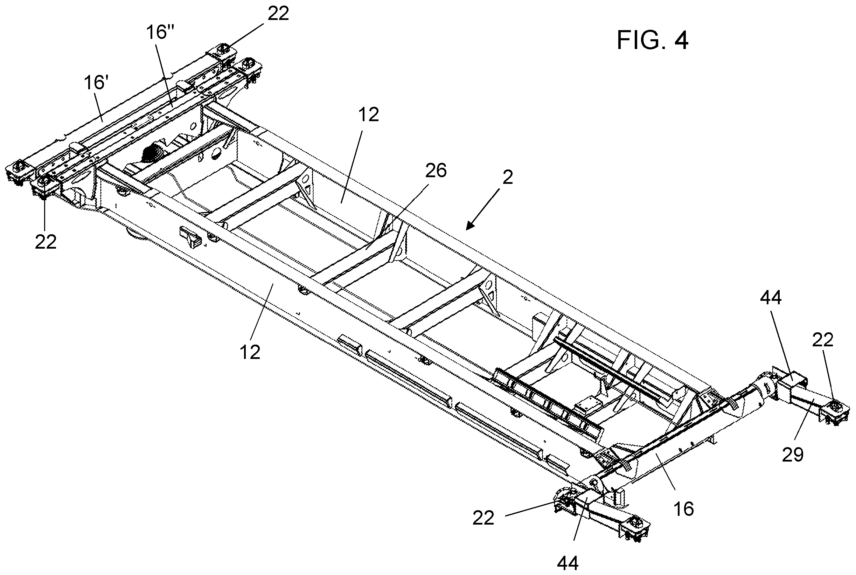

- Figure 4: shows a perspective view on enlarged scale of only the rear part of said frame,

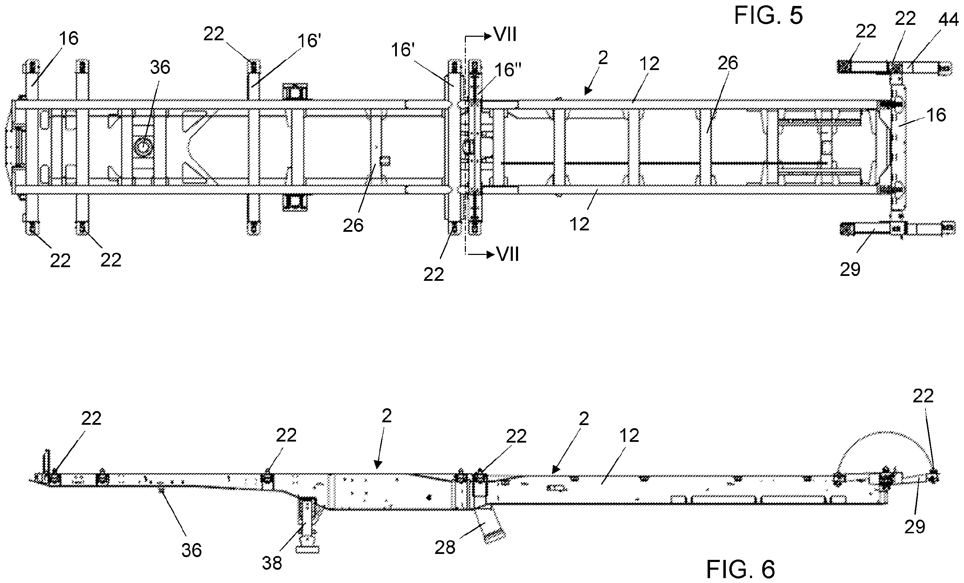

- Figure 5: shows a plan view of the entire frame,
- Figure 6: shows a side view of it,
- Figure 7: shows an enlarged cross section of it taken along VII-VII V in fig. 5,
- Figure 8: shows a perspective view of the axle-carrying structure,
- Figure 9: shows a plan view of it,
- Figure 10: shows a side view of it,
- Figure 11: shows a side view of the semitrailer with a twenty-foot container constrained to the frame and with the axle-carrying structure arranged in retracted configuration,
- Figure 12: shows a side view of it with two twenty-foot containers constrained to the frame, with the rear container inclined following the temporary lifting of its front end and with the axle-carrying structure in retracted configuration flushed with the rear container,
- Figure 13: shows a side view of it with two twenty-foot containers constrained to the frame and with the axle-carrying structure arranged in advanced configuration,
- Figure 14: shows a side view of it with one twenty-foot front container and one intermodal rear body of larger size but with twenty-foot ISO attachments, both constrained to the frame, and with the axle-carrying structure in retracted configuration,
- igure 15: shows a side view of it with a thirty-foot container constrained to the frame and with the axle-carrying structure in advanced configuration,
- Figure 16: shows it in the same view as fig. 15 but with the axle-carrying structure in retracted configuration,
- Figure 17: shows a side view of it with a forty-foot container constrained to the frame and with the axle-carrying structure in advanced configuration,
- Figure 18: shows it in the same view as fig. 17 but with the axle-carrying structure in retracted configuration, and
- Figure 19: shows a side view of it with a forty-five-foot container constrained to the frame and with the axle-carrying structure in retracted configuration.

As shown in the figures, the container-carrying semitrailer according to the invention substantially comprises two fundamental units: a rigid frame 2, arranged for constraining standardized containers, and an axle-carrying structure 4, which can be positioned along the frame 2 and bearing the three axles 6,8,10 applied to it.

Appropriately, in essential terms, the frame 2 comprises two longitudinal members 12, the length of which is preferably slightly longer than the length of one forty-foot container 14 and are arranged between each other at a distance smaller than the standardized length of the containers.

Appropriately, the frame 2 comprises a plurality of traverse beams 16,16',16", the length of which is equal to the standardized width of the containers, are constrained to said longitudinal members 12 and protrude beyond them on both sides.

Appropriately, the frame 2 has fixed length, i.e. is not telescopically extensible and is not formed by two or more mutually sliding parts.

In particular, the whole of the longitudinal members 12 and of the traverse beams 16,16',16" define a rigid structure of fixed length, adapted to support one forty-foot container 14, or alternatively two twenty-foot containers 18 or one twenty-foot container 18 on the front part and one intermodal body 18' on the rear part, or one thirty-foot container 20, or even only one 18 twenty-foot container positioned either on the front part or on the rear part of the frame 2.

Appropriately, it is worth noting that "rear" means a part, zone or direction, opposite to a "front" part, zone, direction, which is more distant with respect to or is moving away from a pin 36, provided for coupling the semitrailer to a fifth wheel 32 of a tractor 34. In particular, the coupling pin 36 of the semitrailer to the fifth wheel 32 of the tractor 34 is provided at the front end of the frame 2.

While the two end traverse beams 16 are arranged at a distance from each other substantially equal to the standardized length of a forty-foot container 14, all the intermediate traverse beams 16' are fixed to the two longitudinal members 12 in positions so as to be arranged, as shown in greater detail below, at the positions (standardized distances) of the corner casings of the different types of container to be constrained to the frame 2.

For this purpose, traditional locking means 22 (twistlocks) cooperating with the traditional corner castings, with which all standardized containers are provided, are applied on the ends of all traverse beams 16,16',16" in order to lock the container or containers to the frame 2.

While the twistlocks 22 mounted on the end traverse beams 16 may be fixed, the twistlocks mounted on all the intermediate traverse beams 16',16" are preferably either removable or retractable, in order not to be of hindrance when they are not used to constrain a particular container to the frame 2.

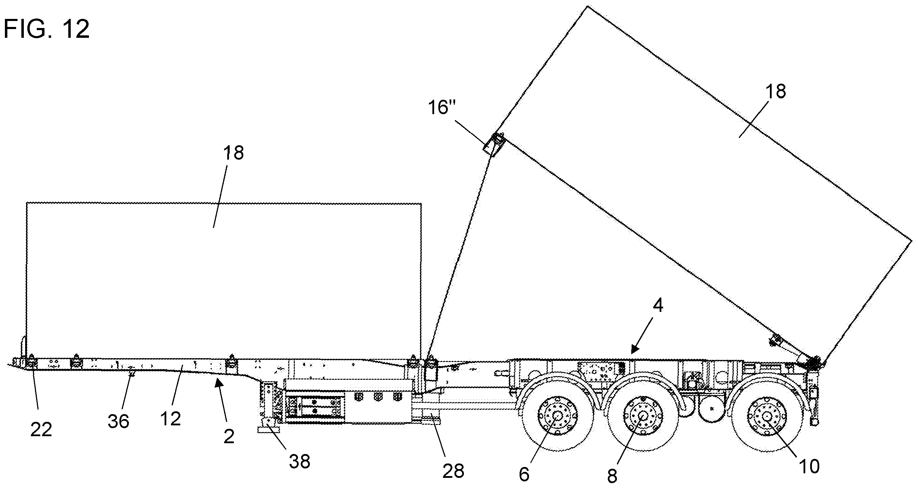

Since the currently most common containers are twenty-foot, thirty-foot and forty-foot containers, the traverse beams 16,16',16" are arranged along the longitudinal members 12 so as to be able to receive one forty-foot container 14 or two twenty-foot containers 18 or even one thirty-foot container 20, which in this case rests with its rear edge on the rear traverse beam 16 and with the front edge on an intermediate traverse beam 16' (fig. 12).

Furthermore, it is provided that the two longitudinal members 12 are connected to each other also by further traverse beams 26 of length equal to the distance between the longitudinal members itself so as to protrude laterally beyond them.

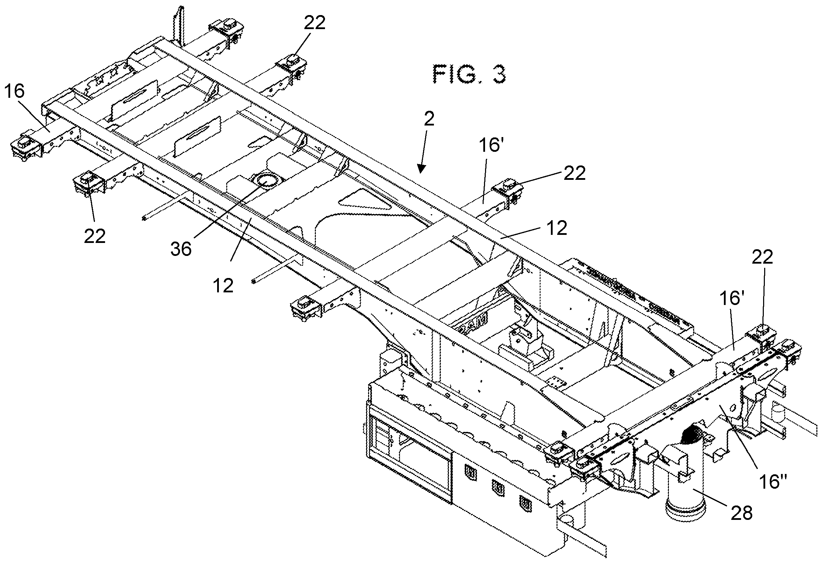

Advantageously, in the median part of the frame 2, it is provided that a traverse beam 16", intended to construct the inner constraining traverse beam of a rear twenty-foot container, may be removably housed by fitting in a corresponding housing obtained therein (fig. 3) instead of being welded to the longitudinal members 12; it is also preferably provided at the ends with two twistlocks 22 removable or retracting and is centrally constrained to a hydraulic jack 28, having the function, as shown in greater detail below, of lifting the traverse beam 16" with respect to the longitudinal members 12 and, by means of this, of inclining the container itself backwards in order to promote the unloading operations, e.g. of the goods loaded into it in bulk manner.

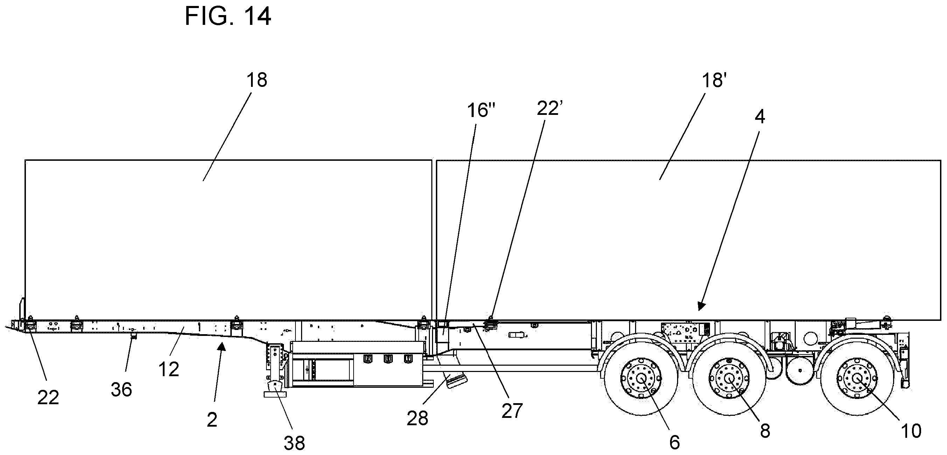

In case of removable twistlocks 22, the axial cavity of the traverse beam 16", after their removal, may be advantageously used for inserting removable arms 27 provided at the free end with other twistlocks 22', so that these are arranged in a more retracted position, suited for constraining an intermodal body 18' of length longer than that of a standard twenty-foot container (fig. 14).

Only one jack 28 for tipping the rear twenty-foot container 18 only is shown in the drawings, but obviously this solution could also be applied to both twenty-foot containers 18 supported by the frame 2.

In the case of one or both inclinable twenty-foot containers 18, the end of the container opposite to the liftable one is articulated to the frame 2 with any traditional means, in particular by making the twistlocks 22 articulated to the respective rear traverse beam 16.

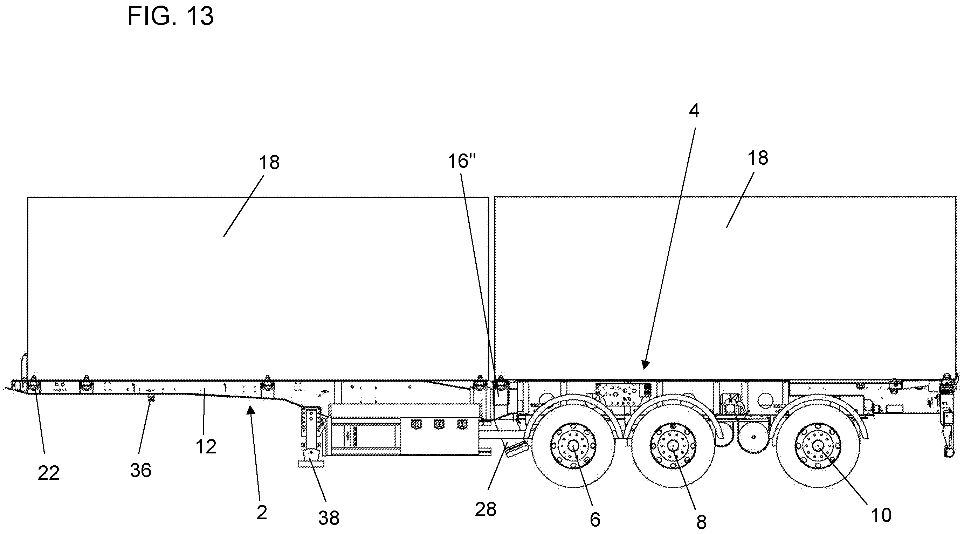

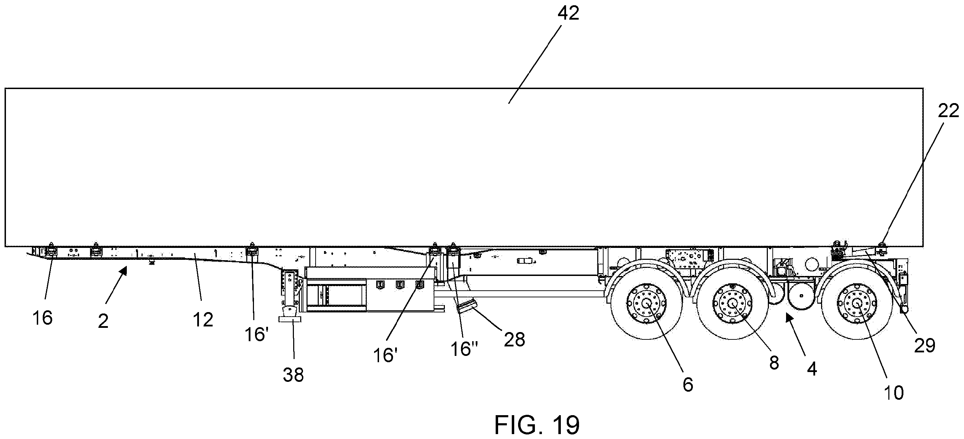

Two preferably short movable arms 29 are articulated to the ends of the rear traverse beam 16 of the frame 2, which arms may rotate by about 180° between an inner position, i.e. contained inside the longitudinal dimension of the frame 2 (fig. 13), and an outer position, in which they extend the back of the frame itself (fig. 19).

Both arms 29 are provided on their free ends with a further twistlock 22, which is arranged so that when the arm 29 is folded outwards, it is facing upwards and is coplanar with the twistlocks 22 applied to the ends of the rear traverse beam 16 as well as with the other twistlocks 22, applied to all the other traverse beams.

The axle-carrying structure 4 substantially consists of a body 30, preferably made of boxed metal sheet, which embraces the frame 2 while allowing longitudinal movements with respect to it. For this purpose, it is apparent that the length of the axle-carrying structure 4 is much shorter than the length of the frame 2 and that sliding rollers or bearings or pads or other similar members, which promote these mutual longitudinal movements, are preferably applied to the body 30.

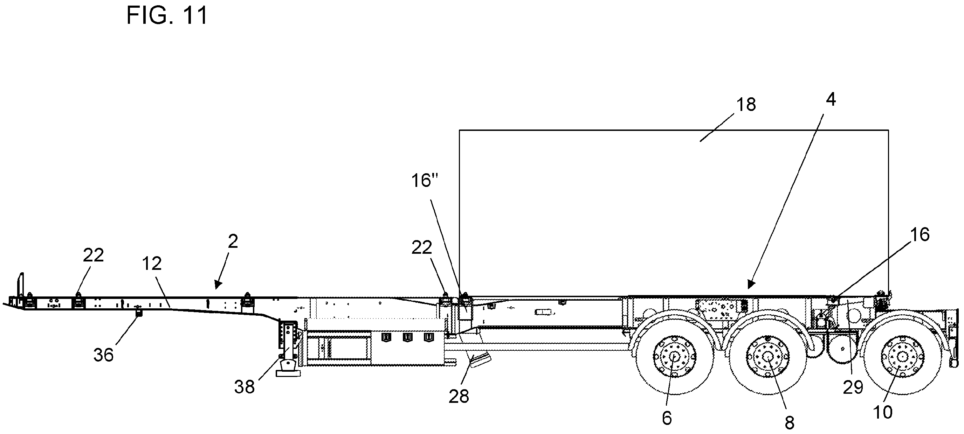

The forward and backward travel of the axle-carrying structure 4 with respect to the frame 2 is limited by the shape of the frame itself and by the physical dimensions, but in all cases it is provided that the rear travel stop position (i.e. the extreme rear position) of the structure itself is such that this axis of the rear axle 10 is situated behind the twistlocks 22 applied to the rear traverse beams 16 of the frame 2 (fig. 11). This makes it possible to keep the weight of the loaded container or containers advanced while traveling and thus to increase the part of weight which is relieved on the fifth wheel 32 of the tractor 34, to the advantage of better vehicle handling while traveling on road, by virtue of a more correct weight distribution on the vehicle axles.

As mentioned, three axles 6,8,10 are applied to the axle-carrying structure 4, and in particular a front axle 6, a central axle 8 and a rear axle 10.

Appropriately, the front axle 6 and the central axle 8 have the respective fixed axes orthogonal to the longitudinal members 12 arranged a given distance from each other.

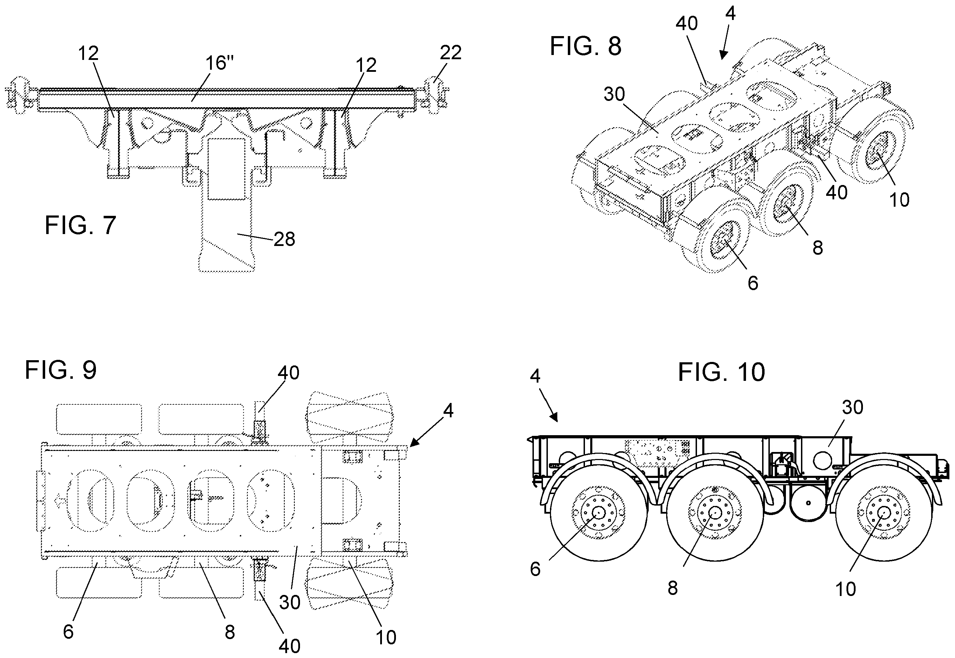

The rear axle 10 is steering (fig. 9) and preferably self-steering. Preferably, the axis of the rear axle 10 is parallel to the axes of the other two axles 8, 10.

Appropriately, the distance between the axis of the rear axle 10 and the axis of the central axle 8 is greater than the distance between the latter and the axis of the front axle 6.

This two-fold feature of having the rear axle 10 which is steering and placed at a greater distance from the central axle 8 than the distance between it and the front axle 6 makes the semitrailer according to the invention particularly advantageous, because it considerably reduces the minimum steering radius of the vehicle, i.e. the distance between the coupling point 36 of the semitrailer, engaged in the fifth wheel 32 of the tractor 34, and the theoretical rotation center of the semitrailer itself, located between the two front axles 6,8.

Both the axles 6,8,10 of the semitrailer and the tires of the wheels mounted on them may advantageously have a load rating per axle higher than the load rating of the most common 9-ton axles (e.g. axles with a load rating of at least 10 tons) and a load rating for each single tire higher than the load rating of the most common tires with 4500 kg load rating (e.g. tires with a load rating of at least 5000 kg.)

The suspension of the semitrailer is interposed between the body 30 of the axle-carrying structure 4 and the single axles 6,8,10 and advantageously but not necessary consists of traditional air springs.

Traditional telescopic legs 38 for resting the semitrailer released from the tractor 34 on the ground and parking it when it is not in use are further applied to an intermediate traverse beam 16' of the frame 2, located between the axle-carrying structure 4 and the pin 36.

Finally, appropriate locking members, e.g. bolts 40 or the like, acting on the frame 2 in order to lock the axle-carrying structure 4 in predetermined positions along the chassis itself, as shown in greater detail below, are applied to the body 30 of the axle-carrying structure 4.

To better understand the operation of the container-carrying semitrailer according to the invention, it is convenient to distinguish between the step of positioning and fixing of one or more containers to the semitrailer and the successive step of balancing of the weight of the loaded container or containers with respect to the vehicle axles.

A container is fixed to the semitrailer in traditional manner, by lifting the container (either empty or loaded) using appropriate equipment and depositing it on the semitrailer already coupled to the tractor 34 or resting on the ground on the two telescopic legs 38.

In this step, a container of any standardized size may be applied to the semitrailer, i.e. a twenty-foot container 18, a thirty-foot container 20, a forty-foot container 14 or even a forty-five-foot container 42.

In the case of twenty-foot containers 18, two may be applied aligned and to the semitrailer and fixed to the respective traverse beams 16,16',16" by means of the twistlocks 22 provided on their ends.

It is also possible to provide fixing one front twenty-foot container 18 and one intermodal body 18' or one tank container or the like of dimensions larger than a twenty-foot container to the frame 2 (e.g. a 7.45 meter intermodal body or a group 23 tank container or the like) but always with corner castings arranged according to ISO standards for a twenty-foot container. In this case, the rear corner castings are fixed to the twistlocks 22 of the arms 29 preventively tipped backwards, while the front corner castings are fixed to the twist locks 22' of the arms 27 applied to the traverse beam 16" of the frame 2 (fig. 14).

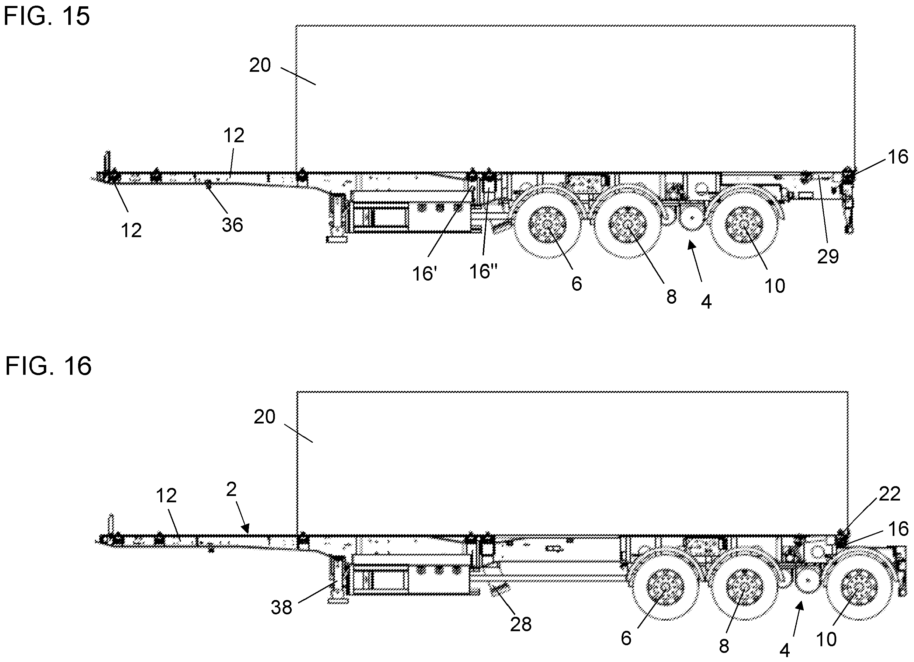

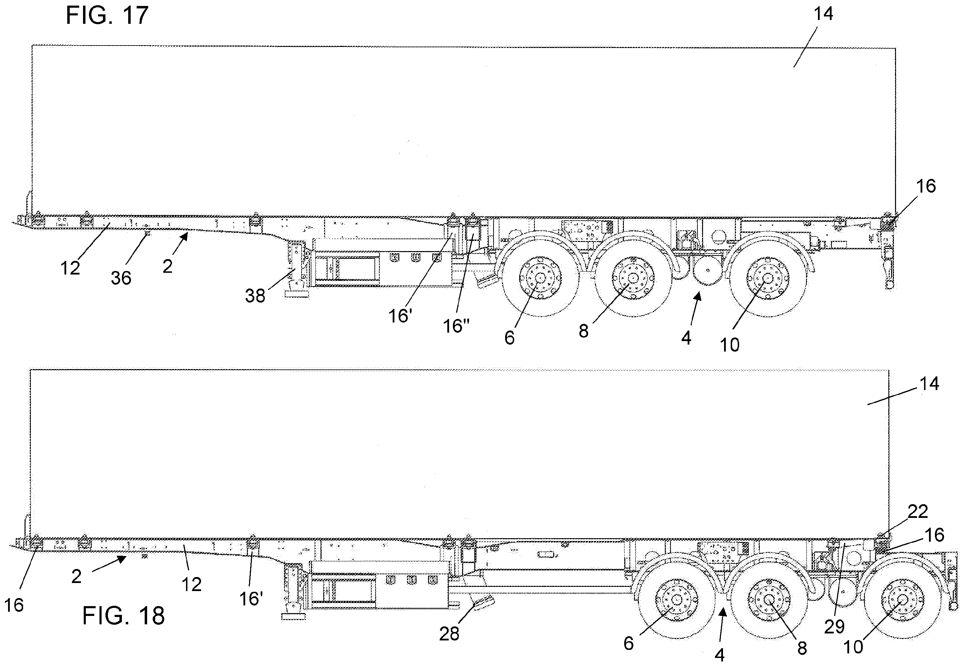

Thirty-foot containers 20 (cf. fig. 15 and 16) may be locked preferably with the rear edge at the twistlocks 22 of the rear traverse beam 16, while forty-foot containers 14 may be locked with the rear edge either at the twistlocks 22 of the rear traverse beam 16 (cf. fig. 17) or at the twistlocks 22 of the two rear arms 29, preventively tipped backwards. Appropriately, this makes it possible to keep a more retracted position of the container 14 on the frame 2 and thus a greater distance between front wall of the container 14 and the cab of the tractor 34, if this greater distance is desired. Furthermore, this configuration appropriately makes it possible to bear the weight of the container on the axles of the semitrailer.

Forty-five-foot containers 42 are always constrained to the frame 2 at the twistlocks 22 of the arms 29 tipped backwards (cf. fig. 19).

Since in all cases the forty-five-foot container 42 rests on the frame 2, its whole weight is distributed on the entire frame and on resting plates 44 applied to the two arms 29 near the rear traverse beam 16. Consequently, the twistlocks provided at the rear end of the arms 29 practically have the sole function of ensuring the locking of the container 42 to the frame 2, together with the other twistlocks 22 provided on all traverse beams, on which the container rests.

The description related to forty-five-foot containers 42 also applies to forty-foot containers 14, when one is positioned on the frame 2 in the previously indicated retracted position.

The correct distribution of the load on the vehicle axles can be checked after the already full container (or the containers) is (or are) constrained to the frame 2 or after the empty container, previously constrained to the frame 2, was loaded with the goods in traditional manner, and in all cases before road transport starts.

This may be advantageously performed also from the cab of the tractor 34, where a control unit connected to pressure gages or other instruments associated with each axle and capable of detecting the load bearing on it is provided.

In the case of incorrect distribution, the vehicle driver may modify the position of the frame 2 with respect to the axle-carrying structure 4 preferably by moving the frame 2 with the tractor 34 with respect to the axle-carrying structure 4 kept with the wheel braked.

Once the load is balanced, condition which can be checked in real-time also from the cab of the tractor 34, the frame 2 may be locked by means of the bolts 40 to the axle-carrying structure 4 and the vehicle is ready to travel on the road.

Given the relatively long travel that the frame 2 may perform with respect to the axle-carrying structure 4, correct balancing of the load is ensured also in the most difficult conditions, which occur, for example, when only one twenty-foot container 18 loaded to the maximum load rating is placed on rear part of the semitrailer or two twenty-foot containers 18, one completely empty is positioned on the front part and other loaded to maximum capacity and is positioned on the rear part.

For example, if the vehicle departs with two fully loaded twenty-foot containers 18 and the frame 2 was set to a given position with respect to the axle-carrying structure 4, corresponding to the correct distribution of the weights between the axles, but along the scheduled route, after having reached the first destination one of the two containers 18 is emptied or replaced with an empty one, the driver can easily balance the load again, because he or she can modify the position of the frame 2 with respect to the axle-carrying structure 4 in the manner described above, with a very simple, rapid and accurate maneuver, while keeping the container constrained to the frame 2. Obviously, this may be performed whenever a variation to the load distribution inside the container/s occurs. This makes it possible to optimize the transport of the containers on road with evident advantages for the purposes of route exploitation, e.g. with two twenty-foot containers having different load conditions, and thus a containment of energy consumption and a lower environmental pollution.

If the tipping of a container is required to unload goods placed in it, this operation is performed by activating the jack 28 constrained to the movable traverse beam 16". In this manner, the jack lifts the traverse beam and, by means of it, inclines the container 18 or the intermodal body 18', if it is provided inside of the container 18, which remains constrained with the rear edge to the twistlocks 22 articulated to the rear traverse beam 16 (fig. 12).

Appropriately, during this step, unlike traditional solutions, no tipping counterframe is needed to sustain the container during tipping, but the container itself constitutes the structural element, to which the liftable traverse beam 16" is constrained.

When the semitrailer reaches destination and the container must be unloaded, because in general this operation, like the previous loading operation, is generally performed when the container is positioned on the edge of a quay, it is evidently appropriate for the rear axle 10 not to protrude beyond the edge of the container; therefore, if this rear axle 10 was positioned so as to produce beyond the rear wall of the container in order to load the fifth wheel 32 more for better vehicle handing of the while traveling, it is appropriate to recall the axle-carrying structure 4 within the dimension of the container constrained to the frame 2 of the semitrailer before the unloading operations. This operation may be easily performed with the methods seen above.

From the description above it clearly results that the container-carrying semitrailer according to the invention is much more advantageous than traditional container-carrying semitrailers because:
- it has a fixed size container-carrying frame, which is thus simpler, more robust and more reliable,
- it is suited for constraining and transporting standardized containers of any length, and for constraining and transporting containers which are not standardized but which have standardized couplings,
- it allows a longitudinal position adjustment of the axle-carrying structure with respect to the container-carrying frame also with the container or containers already mounted and loaded, i.e. in actual road traveling conditions,
- it ensures a limited steering radius of the vehicle,
- it offers high adaptability for different loading conditions, ensuring the transport for two twenty-foot containers in any load condition and reducing the number of transfers in this manner, the number of transported containers being equal, with evident advantages in terms of energy saving and environment-friendliness.

## Claims

1. A semitrailer for interchangeable bodies, containers and similar equipment used for intermodal transport, wherein comprises:
- a frame (2), adapted to support two aligned twenty-foot containers (18) of standardized type and provided with traditional corner castings,
- a pin (36), provided on an end of said frame (2) and removably engageable in a fifth wheel (32) of a traditional tractor (34),
- a plurality of locking means (22) mounted on said frame (2) in positions corresponding to the corner castings of said containers (18),
- an axle-carrying structure (4) longitudinally sliding on said frame (2) and lockable in a plurality of predetermined positions,
- three axles (6,8,10) mounted on said axle-carrying structure (4), one front (6), one central (8) and one rear (10), **characterized in that**, the latter being steering and having a distance from the central axle greater than the distance of the latter from the front axle (6),
and **in that** the extreme rear position of said axle-carrying structure (4) with respect to said frame (2) being such to keep the axis of said steering rear axle (10) in position protruding on the rear beyond the rear locking means (22) mounted on said frame (2).

2. A semitrailer according to claim 1, **characterized in that** said frame (2) has a fixed length.

3. A semitrailer according to one or more of the preceding claims, **characterized in that** an arm (29) movable between two positions turned by about 180° is articulated on the rear end of each longitudinal member (12), one inner position, at which said arm remains inside the clearance of said frame (2), and one outer position, at which said arm extends posteriorly from said frame (2).

4. A semitrailer according to one or more of the preceding claims, **characterized in that** locking means (22) are applied to said movable arm (29), which locking means, when the arm is turned to said outer position, is substantially coplanar with the other locking means with which said frame (2) is provided.

5. A semitrailer according to one or more of the preceding claims, **characterized in that** at least one jack (28) is applied to said frame (2) for actuating an intermediate traverse beam (16") between a lower position, at which it is housed within a housing thereof obtained in said frame, and an upper raised position, which corresponds to the inclined arrangement of a container (18,18'), which is constrained with the two corner castings present on the edge rear to the two locking devices (22) articulated on the rear traverse beam (16) of said frame (2) and with the two corner castings present in the edge in front of the two locking members (22) constrained to said liftable traverse beam (16").

6. A semitrailer according to one or more of the preceding claims, **characterized in that** the rear axle (10) mounted on said axle-carrying structure (4) is of the self-steering type.

7. A semitrailer according to one or more of the preceding claims, **characterized in that** it comprises two end traverse beams (16) which are mutually arranged at a distance substantially equal to the standardized length of a forty-foot container (14).

8. A semitrailer according to one or more of the preceding claims, **characterized in that** the locking means (22) mounted on the end traverse beams (16) are fixed and/or **in that** the locking means (22) mounted on the intermediate traverse beams (16',16") are of removable or retractable type.

9. A semitrailer according to one or more of the preceding claims, **characterized in that** said axle-carrying structure (4) comprises a boxed body (30) which embraces the frame (2) while allowing it to move longitudinally with respect thereto.

10. A semitrailer according to one or more of the preceding claims, **characterized in that** said axles (6,8,10) have a load rating per axle higher than about 9 tons.

11. A semitrailer according to one or more of the preceding claims, **characterized in that** locking members (40) acting on the frame (2) to lock the axle-carrying structure (4) in predetermined positions along the frame itself, are applied to the axle-carrying structure (4).

12. A method for distributing the weight of at least one container (14,18,18',20,42) having standardized size mounted on a container-carrying semitrailer according to one of the claims 1 to 11 to be coupled to a tractor (34) for road transport **characterized in that**:
- said container (14,18,18',20,42) is constrained on a frame (2) of a container-carrying semitrailer, using locking means (22) provided on said frame (2) in positions corresponding to corner castings present in said container,
- loading said container (14,18,18',20,42) with the goods to be transported, if it was not previously loaded with said goods,
- causing the longitudinal sliding of said frame (2) by moving said tractor (34), the frame being constrained to said container (14,18,18',20,42), with respect to said axle-carrying structure (2) kept stationary by braking at least one axle (6,8,10),
- once the desired weight distribution of the loaded container (14,18,18',20,42) is achieved on the axles (6,8,10) of the semitrailer and of the tractor (34), locking said frame (2) with respect to said axle-carrying structure (4) before transporting said semitrailer on road.

13. A method according to the preceding claim, **characterized in that** once arrived at destination, the longitudinal sliding of said frame (2) with respect to said axle-carrying structure (4) is caused by further moving said tractor (34) to take said container (14,18,18',20,42) to the position suited for loading or unloading the goods.

14. A method according to one or more of the preceding claims, **characterized in that** the weight distribution on the vehicle axles is controlled from the cab of the tractor (34) with appropriate instrumentation provided in the semitrailer when at least one loaded container is constrained to the frame of said semitrailer and, if said distribution is not satisfactory, performing the following operations in sequence:
- releasing said frame (2) with respect to said axle-carrying structure (4),
- by means of said tractor (34), causing the sliding of said frame (2) with respect to said axle-carrying structure (4), which is kept stationary, until said distribution is satisfactory, and finally
- locking said frame (2) again with respect to said axle-carrying structure (4).

15. A method according to one or more of the preceding claims, **characterized in that**, on the basis of the information provided by means provided to detect the load bearing on each axle, causing the longitudinal sliding of said frame (2) by moving said tractor (34), said container (14,18,18',20,42) being constrained to the frame, with respect to said axle-carrying structure (2) kept stationary by braking at least one axle (6,8,10).

## Patentansprüche

1. Anhänger für austauschbare Körper, Container und ähnliche Ausrüstung, die für den intermodalen Verkehr verwendet wird, wobei dieser umfasst:
- einen Rahmen (2), der konzipiert ist, um zwei ausgerichtete Zwanzig-Fuß-Standardcontainer (18) zu tragen, und mit herkömmlichen Eckbeschlägen verse-hen ist,
- einen Stift (36), der an einem Ende des Rahmens (2) bereitgestellt ist und ent-fernbar in einem fünften Rad (32) einer herkömmlichen Sattelzugmaschine (34) in Eingriff gebracht werden kann,
- eine Vielzahl von Verriegelungsmitteln (22), die an dem Rahmen (2) in Positio-nen entsprechend den Eckbeschlägen der Container (18) befestigt sind,
- eine Achstragstruktur (4), die in Längsrichtung auf dem Rahmen (2) gleitet und in einer Vielzahl von vorbestimmten Positionen verriegelbar ist,
- drei Achsen (6, 8, 10), die an der Achstragstruktur (4) befestigt sind, eine vorde-re (6), eine mittlere (8) und eine hintere (10), **dadurch gekennzeichnet, dass** die Letztere lenkend ist und einen Abstand von der Mittelachse aufweist, der größer als der Abstand der Letzteren von der Vorderachse (6) ist, und dadurch, dass die äußerste hintere Position der Achstragstruktur (4) in Bezug auf den Rahmen (2) derart ist, dass die Achse der lenkenden Hinterachse (10) auf der Rückseite über die hinteren Verriegelungsmittel (22), die an dem Rahmen (2) befestigt sind, hin-aus vorstehend in Position gehalten wird.

2. Anhänger nach Anspruch 1, **dadurch gekennzeichnet, dass** der Rahmen (2) eine feste Länge aufweist.

3. Anhänger nach einem oder mehreren der vorhergehenden Ansprüche, **dadurch gekennzeichnet, dass** ein Arm (29), der zwischen zwei Positionen, die um etwa 180° gedreht sind, bewegbar ist, an der Rückseite jedes Längselements (12) angelenkt ist, einer Innenposition, an der der Arm innerhalb des Abstands des Rahmens (2) bleibt, und einer Außenposition, an der sich der Arm nach hin-ten von dem Rahmen (2) erstreckt.

4. Anhänger nach einem oder mehreren der vorhergehenden Ansprüche, **dadurch gekennzeichnet, dass** die Verriegelungsmittel (22) an dem bewegbaren Arm (29) angebracht sind, wobei das Verriegelungsmittel, wenn der Arm in die Außenposition gedreht ist, im Wesentlichen komplanar mit den anderen Verrie-gelungsmitteln ist, mit denen der Rahmen (2) versehen ist.

5. Anhänger nach einem oder mehreren der vorhergehenden Ansprüche, **dadurch gekennzeichnet, dass** mindestens ein Hebezeug (28) an dem Rahmen (2) angebracht ist, zum Betätigen einer Zwischentraverse (16") zwischen einer unteren Position, an der es innerhalb eines Gehäuses davon, das in dem Rahmen erhalten ist, untergebracht ist, und einer oberen angehobenen Position, die der geneigten Anordnung eines Containers (18, 18') entspricht, der mit den zwei Eckbeschlägen, die an der Kante hinter den beiden Verriegelungsvorrichtungen (22), die an der hinteren Traverse (16) des Rahmens (2) angelenkt sind, vorhan-den sind, und mit den beiden Eckbeschlägen, die an der Kante vor den beiden Verriegelungselementen (22), die an der anhebbaren Traverse (16") gehalten werden, vorhanden sind, gehalten wird.

6. Anhänger nach einem oder mehreren der vorhergehenden Ansprüche, **dadurch gekennzeichnet, dass** die an der Achstragstruktur (4) befestigte Hinterachse (10) selbstlenkend ist.

7. Anhänger nach einem oder mehreren der vorhergehenden Ansprüche, **dadurch gekennzeichnet, dass** er zwei Endtraversen (16) umfasst, die zueinander in einem Abstand angeordnet sind, der im Wesentlichen gleich der Standard-länge eines Vierzig-Fuß-Containers (14) ist.

8. Anhänger nach einem oder mehreren der vorhergehenden Ansprüche, **dadurch gekennzeichnet, dass** die an der Endtraverse (16) befestigten Verriege-lungsmittel (22) fest sind, und/oder dadurch, dass die an den Zwischentraversen (16', 16") befestigten Verriegelungsmittel (22) entfernbar oder einklappbar sind.

9. Anhänger nach einem oder mehreren der vorhergehenden Ansprüche, **dadurch gekennzeichnet, dass** die Achstragstruktur (4) einen Kastenkörper (30) umfasst, der den Rahmen (2) umschließt und es diesem zugleich ermöglicht, sich in Längsrichtung in Bezug dazu zu bewegen.

10. Anhänger nach einem oder mehreren der vorhergehenden Ansprüche, **dadurch gekennzeichnet, dass** die Achsen (6, 8, 10) eine Tragfähigkeit pro Achse von mehr als etwa 9 Tonnen aufweisen.

11. Anhänger nach einem oder mehreren der vorhergehenden Ansprüche, **dadurch gekennzeichnet, dass** Verriegelungselemente (40), die auf den Rahmen (2) wirken, um die Achstragstruktur (4) in vorbestimmten Positionen entlang des Rahmens selbst zu verriegeln, an der Achstragstruktur (4) angebracht sind.

12. Verfahren zum Verteilen des Gewichts von mindestens einem Container (14, 18, 18' ,20, 42) einer Standardgröße, der auf einem containertragenden An-hänger nach einem der Ansprüche 1 bis 11 befestigt ist, der an eine Sattelzug-maschine (34) zum Straßentransport gekoppelt werden soll, dadurch gekenn-zeichnet, dass:
- der Container (14, 18, 18', 20, 42) an einem Rahmen (2) eines containertragen-den Anhängers unter Verwendung von Verriegelungsmitteln (22) gehalten wird, die an dem Rahmen (2) in Positionen bereitgestellt sind, die Eckbeschlägen ent-sprechen, die an dem Container vorhanden sind,
- Beladen des Containers (14, 18, 18', 20, 42) mit den zu transportierenden Wa-ren, wenn er nicht zuvor mit den Waren beladen wurde,
- Bewirken des Gleitens des Rahmens (2) in Längsrichtung durch Bewegen der Sattelzugmaschine (34), wobei der Rahmen an dem Container (14, 18, 18', 20, 42) gehalten wird, in Bezug auf die Achstragstruktur (2), die durch Bremsen von mindestens einer Achse (6, 8, 10) stationär gehalten wird,
- sobald die gewünschte Gewichtsverteilung des beladenen Containers (14, 18, 18', 20, 42) auf den Achsen (6, 8, 10) des Anhängers und der Sattelzugmaschine (34) erreicht ist, Verriegeln des Rahmens (2) in Bezug auf die Achstragstruktur (4), bevor der Anhänger auf der Straße transportiert wird.

13. Verfahren nach dem vorhergehenden Anspruch, **dadurch gekennzeichnet, dass**, bei Ankunft am Zielort, das Gleiten des Rahmens (2) in Längsrichtung in Bezug auf die Achstragstruktur (4) dadurch bewirkt wird, dass die Sattelzug-maschine (34) weiter bewegt wird, um den Container (14, 18, 18', 20, 42) in die Position zu bringen, die für das Laden oder Entladen der Waren geeignet ist.

14. Verfahren nach einem oder mehreren der vorhergehenden Ansprüche, **dadurch gekennzeichnet, dass** die Gewichtsverteilung auf den Fahrzeugachsen von der Kabine der Sattelzugmaschine (34) aus mit an dem Anhänger bereitgestellter geeigneter Instrumentenausrüstung gesteuert wird, wenn mindestens ein beladener Container an dem Rahmen des Anhängers gehalten wird, und wobei, wenn die Verteilung nicht zufriedenstellend ist, die folgenden Vorgänge der Rei-he nach durchgeführt werden:
- Lösen des Rahmens (2) in Bezug auf die Achstragstruktur (4),
- mittels der Sattelzugmaschine (34), Bewirken des Gleitens des Rahmens (2) in Bezug auf die Achstragstruktur (4), die stationär gehalten wird, bis die Verteilung zufriedenstellend ist, und schließlich
- erneutes Verriegeln des Rahmens (2) in Bezug auf die Achstragstruktur (4).

15. Verfahren nach einem oder mehreren der vorhergehenden Ansprüche, **gekennzeichnet durch**, basierend auf den Informationen, die **durch** Mittel bereit-gestellt werden, die zum Detektieren der von jeder Achse getragenen Last bereit-gestellt sind, das Bewirken des Gleitens des Rahmens (2) in Längsrichtung **durch** Bewegen der Sattelzugmaschine (34), wobei der Container (14, 18, 18', 20, 42) an dem Rahmen gehalten wird, in Bezug auf die Achstragstruktur (2), die **durch** Bremsen von mindestens einer Achse (6, 8, 10) stationär gehalten wird.

## Revendications

1. Semi-remorque pour carrosseries interchangeables, conteneurs et équipements similaires utilisés pour le transport intermodal, qui comprend:
- un châssis (2), adapté pour supporter deux conteneurs de vingt pieds alignés (18) de type normalisé et pourvus de moulages d'angle traditionnels,
- une goupille (36), prévue sur une extrémité dudit châssis (2) et pouvant s'engager de manière amovible dans une cinquième roue (32) d'un tracteur traditionnel (34),
- une pluralité de moyens de verrouillage (22) montés sur ledit châssis (2) dans des positions correspondant aux pièces d'angle moulées desdits conteneurs (18),
- une structure porte-essieu (4) coulissant longitudinalement sur ledit châssis (2) et verrouillable dans une pluralité de positions prédéterminées,
- trois essieux (6,8,10) montés sur ladite structure porte-essieu (4), un avant (6), un central (8) et un arrière (10), **caractérisé par le fait que** ce dernier est directeur et éloigné du centre essieu supérieur à la distance de ce dernier à l'essieu avant (6),
et en ce que la position arrière extrême de ladite structure porte-essieu (4) par rapport audit châssis (2) est telle qu'elle maintient l'axe dudit essieu directeur arrière (10) en position faisant saillie à l'arrière au-delà des moyens de verrouillage arrière (22) monté sur ledit châssis (2).

2. Semi-remorque selon la revendication 1, **caractérisée en ce que** ledit châssis (2) a une longueur fixe.

3. Semi-remorque selon une ou plusieurs des revendications précédentes, **caractérisée en ce qu'**un bras (29) mobile entre deux positions tournées d'environ 180° est articulé sur l'extrémité arrière de chaque longeron (12), une position intérieure, dans laquelle ledit bras reste à l'intérieur du jeu dudit châssis (2), et une position extérieure, dans laquelle ledit bras s'étend vers l'arrière dudit châssis (2).

4. Semi-remorque selon une ou plusieurs des revendications précédentes, **caractérisée en ce que** des moyens de verrouillage (22) sont appliqués audit bras mobile (29), lesquels moyens de verrouillage, lorsque le bras est tourné vers ladite position extérieure, sont substantiellement coplanaires avec les autres moyens de verrouillage dont est pourvu ledit châssis (2).

5. Semi-remorque selon une ou plusieurs des revendications précédentes, **caractérisée en ce qu'**au moins un vérin (28) est appliqué sur ledit châssis (2) pour actionner une traverse intermédiaire (16") entre une position inférieure, dans laquelle il est logé à l'intérieur d'un logement de celui-ci obtenu dans ledit châssis, et une position haute relevée, qui correspond à la disposition inclinée d'un récipient (18,18'), qui est contraint avec les deux pièces d'angle moulées présentes sur le bord arrière aux deux des dispositifs (22) articulés sur la traverse arrière (16) dudit châssis (2) et avec les deux pièces d'angle moulées présentes dans le bord devant les deux organes de verrouillage (22) contraints à ladite traverse relevable (16").

6. Semi-remorque selon une ou plusieurs des revendications précédentes, **caractérisée en ce que** l'essieu arrière (10) monté sur ladite structure porte-essieu (4) est du type autovireur.

7. Semi-remorque selon une ou plusieurs des revendications précédentes, **caractérisée en ce qu'**elle comprend deux traverses d'extrémité (16) qui sont mutuellement disposées à une distance substantiellement égale à la longueur normalisée d'un conteneur de quarante pieds (14).

8. Semi-remorque selon une ou plusieurs des revendications précédentes, **caractérisée en ce que** les moyens de verrouillage (22) montés sur les traverses d'extrémité (16) sont fixes et/ou **en ce que** les moyens de verrouillage (22) montés sur la traverse intermédiaire les poutres (16', 16") sont de type amovible ou rétractable.

9. Semi-remorque selon une ou plusieurs des revendications précédentes, **caractérisée en ce que** ladite structure porte-essieu (4) comprend un corps caissonné (30) qui embrasse le châssis (2) tout en lui permettant de se déplacer longitudinalement par rapport à celui-ci.

10. Semi-remorque selon une ou plusieurs des revendications précédentes, **caractérisée en ce que** lesdits essieux (6,8,10) ont une capacité de charge par essieu supérieure à environ 9 tonnes.

11. Semi-remorque selon une ou plusieurs des revendications précédentes, **caractérisée en ce que** des éléments de verrouillage (40) agissant sur le châssis (2) pour verrouiller la structure porte-essieu (4) dans des positions prédéterminées le long du châssis lui-même, sont appliqués sur la structure porte-essieu (4).

12. Procédé de répartition du poids d'au moins un conteneur (14, 18, 18', 20, 42) de taille normalisée monté sur une semi-remorque porte-conteneur selon une des revendications 1 a 11 pour atteler à un tracteur (34) pour le transport routier, **caractérisé en ce que** :
- ledit conteneur (14, 18, 18', 20, 42) est contraint sur un châssis (2) d'une semi-remorque porte-conteneur, à l'aide de moyens de verrouillage (22) prévus sur ledit châssis (2) dans des positions correspondants aux pièces d'angle moulées présentes dans ledit conteneur,
- chargement dudit conteneur (14, 18, 18', 20, 42) avec les marchandises à transporter, s'il n'a pas été préalablement chargé avec lesdites marchandises,
- provoquer le coulissement longitudinal dudit châssis (2) en déplaçant ledit tracteur (34), le châssis étant contraint audit conteneur (14, 18, 18', 20, 42), par rapport à ladite structure porte-essieu (2) maintenu immobile en freinant au moins un essieu (6,8,10),
- une fois que la répartition de poids souhaitée du conteneur chargé (14,18,18', 20,42) est réalisée sur les essieux (6,8,10) de la semi-remorque et du tracteur (34), verrouiller ledit châssis (2 ) par rapport à ladite structure porte-essieu (4) avant de transporter ladite semi-remorque sur route.

13. Procédé selon la revendication précédente, **caractérisé en ce qu'**une fois arrivé à destination, le glissement longitudinal dudit châssis (2) par rapport à ladite structure porte-essieu (4) est provoqué par un déplacement supplémentaire dudit tracteur (34) pour prendre ledit conteneur (14, 18, 18', 20, 42) à la position appropriée pour charger ou décharger les marchandises.

14. Procédé selon une ou plusieurs des revendications précédentes, **caractérisé en ce que** la répartition du poids sur les essieux du véhicule est contrôlée depuis la cabine du tracteur (34) avec une instrumentation appropriée prévue dans la semi-remorque lorsqu'au moins un conteneur chargé est contraint au châssis de ladite semi-remorque et, si ladite répartition n'est pas satisfaisante, effectuer les opérations suivantes en séquence:
- libérer ledit châssis (2) par rapport à ladite structure porte-essieu (4),
- au moyen dudit tracteur (34), provoquer le glissement dudit châssis (2) par rapport à ladite structure porte-essieu (4), qui est maintenue immobile, jusqu'à ce que ladite répartition soit satisfaisante, et enfin
- verrouiller à nouveau ledit châssis (2) par rapport à ladite structure porte-essieu (4).

15. Procédé selon une ou plusieurs des revendications précédentes, **caractérisé en ce que**, sur la base des informations fournies par les moyens prévus pour détecter le support de charge sur chaque essieu, provoquant le glissement longitudinal dudit châssis (2) en déplaçant ledit tracteur (34), ledit conteneur (14, 18, 18', 20, 42) étant contraint au châssis, par rapport à ladite structure porte-essieu (2) maintenue immobile en freinant au moins un essieu (6, 8, 10).
